# EUROPÄISCHE PATENTSCHRIFT

(11) **EP 2 309 211 B1**
(45) Veröffentlichungstag und Bekanntmachung des Hinweises auf die Patenterteilung: **25.11.2015**
(21) Anmeldenummer: 10011916.3
(22) Anmeldetag: 30.09.2010
(51) Int. Cl.: F25B 17/08

(54) **Vakuum-Sorptionsvorrichtung und Verfahren zum Betrieb dieser Vorrichtung**
Vacuum sorption device and method for operating same
Dispositif de sorption sous vide et procédé de fonctionnement de ce dispositif

(30) Priorität: 01.10.2009 DE 102009043679
(43) Veröffentlichungstag der Anmeldung: 13.04.2011
(73) Patentinhaber: Viessmann Werke GmbH & Co. KG, 35108 Allendorf (DE)
(72) Erfinder: Dawoud, Belal, Dr., 59955 Winterberg (DE); Bornmann, Andreas, 35099 Burgwald (DE); Chmielewski, Stefanie, 35066 Frankenberg (DE); Höfle, Peter, 64646 Heppenheim (DE)
(74) Vertreter: Wolf, Michael

(56) Entgegenhaltungen:
- EP-A1- 1 985 948
- EP-A1- 2 045 547
- DE-A1- 10 254 098

## Beschreibung

Die Erfindung betrifft eine Vakuum-Sorptionsvorrichtung gemäß dem Oberbegriff des Patentanspruchs 1 und ein Verfahren zum Betrieb dieser Vorrichtung gemäß dem Oberbegriff des Patentanspruchs 4.

Eine Vakuum-Sorptionsvorrichtung der eingangs genannten Art ist nach der EP 1 985 948 A1 bekannt. Diese besteht aus einer Wärmequelle mit einem ersten Wärmetauscher, einen aus einem Sorptionsmittel und einem zweiten Wärmetauscher gebildeten, periodisch ein Kältemittel sorbierenden oder desorbierenden Sorber und einen mit einem Wärmeträgermedium befüllten, die Wärmetauscher miteinander verbindenden, mindestens eine Verbindungsleitung umfassenden Sorberkreislauf, wobei die Verbindungsleitung eine erste hydraulische Abzweigung zu einer Vorlaufleitung eines Heizkreislaufs und eine zweite hydraulische Abzweigung zu einer Rücklaufleitung des Heizkreislaufs aufweist, wobei dem Sorber ein Kondensator zugeordnet ist, der einerseits mit der Rücklaufleitung des Heizkreislaufs und andererseits über ein am Heizkreislauf nach der ersten hydraulischen Abzweigung angeordnetes Regelventil mit der Vorlaufleitung des Heizkreislaufs verbunden ist, wobei das Regelventil zur Einstellung eines Mischungsverhältnisses des Wärmeträgermediums aus dem Sorberkreislauf und aus der Rücklaufleitung ausgebildet ist. - Auf die Funktionsbeschreibung dieser Lösung wird vollumfänglich Bezug genommen.

Der Erfindung liegt die Aufgabe zugrunde, den Wirkungsgrad einer Vakuum-Sorptionsvorrichtung der eingangs genannten Art weiter zu verbessern.

Diese Aufgabe ist mit einer Vakuum-Sorptionsvorrichtung der eingangs genannten Art durch die im Kennzeichen des Patentanspruchs 1 und 4 aufgeführten Merkmale gelöst.

Nach der Erfindung ist also vorgesehen, dass zwischen der ersten hydraulischen Abzweigung und dem Regelventil ein durchströmbares Pufferelement zur zeitweiligen Aufnahme und Zwischenspeicherung von kaltem Wärmeträgermedium, das zur Kühlung des Sorbers verwendet wird, angeordnet ist.

Mit anderen Worten ist erfindungsgemäß vorgesehen, dass die Verbindungsleitung zwischen der ersten hydraulischen Abzweigung und dem Regelventeil ein derart großes Volumen aufweist, dass zu Beginn einer Sorptionsphase das Regelventil für eine zur Sorberkühlung ausreichende Zeit vollständig geöffnet werden kann (vor Beginn der Sorptionsphase wird also erfindungsgemäß eine Sorberkühlungsphase zwischengeschaltet), wobei der gesamte, von einer Pumpe des Heizkreislaufs geförderte Volumenstrom mit Rücklauftemperatur den Sorber durchströmt. Dabei wird das heiße Wasser aus dem Sorber in die Verbindungsleitung geschoben und das kalte Wasser aus dem erfindungsgemäßen, an der Verbindungsleitung angeordneten Pufferelement durch das Regelventil in den Heizkreislauf. Die neu hinzugekommene Betriebsphase zur Sorberkühlung wird beendet, wenn am heizkreisseitigen Ausgang des Regelventils ein fest (bzw. vor-) definierter Temperaturanstieg registriert wird.

Andere vorteilhafte Weiterbildungen der erfindungsgemäßen Vakuum-Sorptionsvorrichtung ergeben sich aus den abhängigen Patentansprüchen.

Der Vollständigkeit halber wird auf DE 102 54 098 A1 hingewiesen, aus der zwar eine Heizungsanlage mit einem Pufferspeicher bekannt ist, der aber nicht zur Aufnahme von kaltem Wärmeträgermedium und zur Kühlung eines Sorbers dient.

Die erfindungsgemäße Vakuum-Sorptionsvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: ein Schaltbild der Vakuum-Sorptionsvorrichtung mit dem erfindungsgemäßen Pufferelement;
- Figur 2: ein Zeit-Diagramm mit Sorbertemperaturen mit dem bzw. ohne das erfindungsgemäße(n) Pufferelement und
- Figur 3: ein Zeit-Diagramm mit Druckverläufen im Kondensator- und Verdampferbauraum mit dem bzw. ohne das erfindungsgemäße(n) Pufferelement.

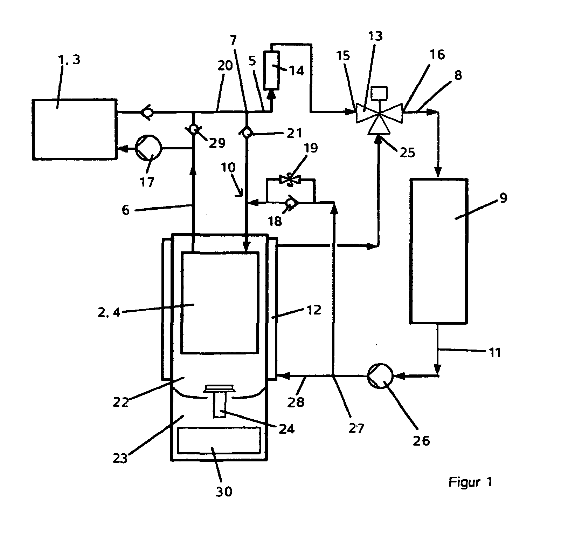

Dargestellt ist in Figur 1 eine Wärmequelle 3 (zum Beispiel ein Brenner, insbesondere Öl- oder Gasbrenner) mit Wärmetauscher 1, ein Sorber 4 sowie ein Kreislauf samt hydraulischer Führung (Sorberkreislauf 6 und Heizkreislauf 9).

### a) Desorptionsphase

In der Desorptionsphase kann der dargestellte Teil der Hydraulik, die den Brenner mit dem Sorber 4 verbindet, mittels des dargestellten Regelventils 13 vom restlichen Heizkreislauf 9 abgetrennt werden. Der Sorberkreislauf 6 verfügt über keinerlei Ausdehnungsgefäß, weshalb durch eine selbstständige Druckaufladung der Siedezustand zuverlässig verhindert werden kann und kein separater Kreislauf erforderlich ist. Das Regelventil 13 wird geschlossen (damit ist der Strömungspfad vom Eingang 15 zum Ausgang 16 geschlossen). Die Pumpe 17 und die Wärmequelle 3 werden gestartet. Durch die in das Medium eingebrachte Wärme in Verbindung mit der Volumenausdehnung durch den Temperaturanstieg steigt der Druck im Sorberkreislauf 6 sofort an. Hierdurch wird als nächster Schritt die Rückschlagklappe 18 dicht zugedrückt. Voraussetzung hierfür ist lediglich, dass das Regelventil 13 hinreichend dicht schließt und ein Differenzdruck über das Ventil aufgebaut werden kann. Da der genannte Druck (auch nur in Teilen der Anlage) im Prinzip nicht zuverlässig beherrschbar ist, wird zusätzlich das Überströmventil 19 vorgesehen, welches eine Verbindung zwischen dem druckaufgeladenen Teil (Sorberkreislauf 6) und dem nicht druckaufgeladenen Teil (Heizkreislauf 9) herstellt. Dieses Überströmventil 19 öffnet bei einem eingestellten Differenzdruck und lässt das Wasser, welches über den eingestellten maximalen Druck hinaus eine zusätzliche Druckerhöhung bewirken würde, kontrolliert in den nicht druckaufgeladenen Heizkreislauf 9 ab. Auf diese Weise lässt sich während der Desorptionsphase im Teilkreislauf zwischen Brenner und Sober 4 durch das Überströmventil 19 ein beliebiger Druck einstellen (zum Beispiel 5 bar). Hiermit kann dann ohne Probleme eine Temperatur größer der Siedetemperatur des Druckes im Heizkreislauf 9 realisiert werden. Um die für die Desorption erforderliche Wärme vom ersten Wärmetauscher 1 zum Sorber 4 zu transportieren, strömt das Wasser aus dem ersten Wärmetauscher 1 kommend durch die Vorlaufleitung 20 die Rückschlagklappe 21 passierend zum Sorber 4. Die Verbindungsleitung 5 wird dabei nicht durchströmt und bleibt kalt.

Während der Sorber 4 aufgeheizt wird, kühlt der Rücklauf (über die Rücklaufleitung 11) den Kondensator 12, wodurch das desorbierte Kältemittel verflüssigt wird. Die Auslegung des Kondensators 12 entspricht hierbei dem Stand der Technik gemäß der DE 36 25 247 A1. Das Kältemittelkondensat läuft auf der Innenwand des Kondensators 12 herab und sammelt sich auf dem Trennboden, der den Kondensatorbauraum 22 vom Verdampferbauraum 23 trennt. Der Trennboden ist mit einer geeigneten Rückschlagklappe 24 (siehe DE 10 2004 049 408 A1) versehen. Das Heizungswasser erwärmt sich durch die Aufnahme der Kondensationswärme und durchströmt dann das Regelventil 13 vom heizkreisseitigen Eingang 25 zum heizkreisseitigen Ausgang 16 (Vorlaufleitung 8) und von dort in den Heizkreislauf 9.

Diese Phase dauert so lange, bis die maximale Desorptionstemperatur (zum Beispiel 140°C) erreicht ist. Danach wird der Brenner ausgeschaltet, die Pumpe 17 des Sorberkreislaufs 6 bleibt dagegen eine gewisse Nachlaufzeit (zum Beispiel bis zu 100 Sekunden) eingeschaltet, um das Wärmeträgermedium durch die dann am Sorber 4 noch aufgewendete Desorptionswärme zu kühlen und somit den Druck im Desorptionskreislauf auf das Niveau des Heizungswasserdruckes zu reduzieren.

### b) Sorptionsphase gemäß der EP 1 985 948 A1

Nach dem Ablauf der so genannten Desorptionsnachlaufzeit wird die Pumpe 17 des Sorberkreislaufs 6 ausgeschaltet. Zu diesem Zeitpunkt fördert die Pumpe 26 des Heizkreislaufs 9 das Heizungswasser in den Kondensator 12 hinein. Aus dem Kondensator 12 kommend durchströmt dieses das Regelventil 13 vom Eingang 25 zum Ausgang 16. Das Regelventil 13 öffnet den Eingang 15 teilweise, um somit einen Teil des heißen Heizungswassers im Sorberkreislaufs 6 (Eingang 15) mit einem Teil des kalten Heizungswasser (Eingang 25) bei nahezu Heizungsrücklauftemperatur zu mischen und dadurch die gewünschte Heizungsvorlauftemperatur am Ausgang 16 einzustellen. Der Heizungswasserrücklauf teilt sich also an der Verteilerstelle 27 (Zugang zur Zusatzleitung 28) in zwei Teilströme auf. Der erste Teil strömt von der Verteilerstelle 27 durch die Rückschlagklappe 18 in den Sorber 4 hinein. Dieser Teilstrom ist zu Beginn der Sorptionsphase klein und wird mit dem Fortlauf dieser Sorptionsphase auf Kosten des zweiten Teils immer größer (bezüglich der Funktion des aus u. a. zwei Rückschlagklappen 21, 29 und der Pumpe 17 gebildeten Bypasses wird auf die DE 10 2004 049 409 B3 verwiesen). Der zweite Teil des von der Pumpe 26 des Heizkreislaufs 9 geförderten Heizungswassermassenstroms läuft über den Kondensator 12 in den Eingang 25 des Regelventils 13, wird dann mit dem ersten Teil im Regelventil 13 vermischt und kommt anschliessend aus dem Regelventil 13 (Ausgang 16) mit der gewünschten Vorlauftemperatur heraus. Mit dem Ablauf der Sorptionsphase wird der Sorber 4 allmählich kälter und ist somit in der Lage, einen Teil des vorher kondensierten und auf dem Trennboden gesammelten Kältemittels aufzunehmen. Dadurch kühlt sich das Kältemittel ab und der Druck im Rondensatorbauraum 22 sinkt. Bei einem bestimmten Druck öffnet sich die Rückschlagklappe 24 und das Kältemittel fließt in den Verdampferbauraum 23 hinein. Ab diesem Moment verdampft das Kältemittel unter Aufnahme der Umgebungswärme im Verdampfer 30 und wird im Sorber 4 adsorbiert. Dadurch wird die Sorptionswärme im Sorptionsmittel freigesetzt. Diese wird vom Heizungswasser, das den Sorber 4 durchströmt, aufgenommen und dem Heizkreislauf 9 zur Verfügung gestellt. Diese Arbeitsphase läuft so lange, bis die geforderte Vorlauftemperatur nicht mehr eingehalten werden kann. Dabei öffnet das Regelventil 13 immer mehr die Verbindung zwischen dem Eingang 15 und dem Ausgang 16. Der Eingang 25 wird immer weiter geschlossen. Schließlich wird nur noch der Sorber 4 durchströmt und der Kondensator 12 nicht mehr. Danach wird der Eingang 15 des Regelventils 13 verschlossen und die Desorptionsphase beginnt erneut.

### c) Sorberkühlungsphase

Die Erfindung besteht nun in der Optimierung des hydraulischen Verschaltungskonzepts und des Betriebs während der Sorptionsphase, um einen höheren Wirkungsgrad zu erreichen.

Zu Beginn der Sorptionsphase ergibt sich das Problem, dass die gewünschte Vorlauftemperatur nur erreicht werden kann, wenn nur sehr wenig Wasser aus dem Sorberkreislauf 6 beigemischt wird. Andernfalls würde die Mischungstemperatur die gewünschte Vorlauftemperatur stark überschreiten. Daher wird gerade zu Beginn der Sorptionsphase um so weniger Wasser aus dem Sorberkreislauf 6 beigemischt, je kleiner die gewünschte Vorlauftemperatur und die Temperaturdifferenz ziwschen Vor- und Rücklauf sind. Entsprechend ist dann der Anteil des Volumenstroms, der aus dem Heizkreisrücklauf über die Rücklaufleitung 11 und das Durchgangsventil bzw. die Rückschlagklappe 18 in den Sorber 4 strömt, klein. Mit anderen Worten: Je günstiger die Betriebsbedingungen für einen Wärmepumpeneffekt, desto kleiner ist der Volumenstromanteil, der über den Sorber geführt wird, zu Beginn der Sorptionsphase und desto länger dauert es, bis dieser Anteil größer wird.

Für einen hohen Wirkungsgrad muss jedoch möglichst viel Umgebungswärme über den Verdampfer 30 eingekoppelt werden. Dafür muss die Verdampfung in der Sorptionsphase so früh, wie möglich, beginnen. Dies ist nur möglich, wenn der Sorber 4 ausreichend gekühlt wird und die Klappe 24 öffnet.

Eine schnelle Kühlung des Sorbers 4 ist bei einem einmodularen Konzept für eine Vakuum-Sorptionsvorrichtung gerade bei ansonsten günstigen Betriebsbedingungen schwierig, da der Sorbervolumenstrom durch die Vorlauftemperaturregelung mittels des Regelventils 13 bestimmt wird.

Da der Sorber 4 nur langsam gekühlt wird, dauert es entsprechend lange, bis der Vakuumdruck im Kondensatorbauraum 22 durch Sorption von Kältemittel den Druck zum Öffnen der Rückschlagklappe 24 unterschreitet und die Verdampfung beginnen kann.

Eine Möglichkeit, mit der Verdampfung frühzeitig zu beginnen, bestünde darin, den Sorber 4 zu Beginn der Sorptionsphase kurzzeitig mit einem hohen Volumenstrom aus dem kalten Rücklauf (Rücklaufleitung 11) zu durchströmen, indem das Regelventil 13 für eine gewisse Zeit vollständig geöffnet und vom Eingang 15 in den heizkreisseitigen Ausgang 16 durchströmt wird. Anschließend wird der Regelbetrieb für die gewünschte Vorlauftemperatur aufgenommen. - Diese Betriebsweise würde jedoch dazu führen, dass die Vorlauftemperatur deutlich überschritten wird. Dabei werden Temperaturen bis etwa 10°C kleiner als die maximale Desorptionstemperatur in den Heizkreislauf 9 geleitet. Gleichzeitig wird die Sorptionsdauer verkürzt, da die zur Verfügung stehende Zeit, bis die gewünschte Vorlauftemperatur unterschritten wird, mit der zur Verfügung stehenden Menge heißen Wassers aus dem Sorberkreis sinkt.

Die Erfindung sieht stattdessen vor, dass die Verbindungsleitung 5 ein derart großes Volumen aufweist, dass zu Beginn einer Sorptionsphase das Regelventil 13 für eine zur Sorberkühlung ausreichende Zeit vollständig geöffnet werden kann, wobei der gesamte, von der Pumpe 26 des Heizkreislaufs 9 geförderte Volumenstrom mit Rücklauftemperatur den Sorber 4 durchströmt. Dabei wird das heiße Wasser aus dem Sorber 4 in die Verbindungsleitung 5 geschoben und das kalte Wasser aus dem erfindungsgemäßen, an der Verbindungsleitung 5 angeordneten Pufferelement 14 durch das Regelventil 13 von Eingang 15 nach Ausgang 16 in den Heizkreislauf 9. Die neu hinzugekommene Betriebsphase zur Sorberkühlung wird beendet, wenn am heizkreisseitigen Ausgang 16 des Regelventils 13 mit einem entsprechenden Temperatursensor (nicht dargestellt) ein fest definierter Temperaturanstieg registriert wird.

Abschließend wird die Sorptionsphase normal mit der Regelung der Vorlauftemperatur fortgeführt. Wird schließlich gegen Ende der Sorptionsphase der Kondensator 12 nicht mehr durchströmt, sondern nur noch der Sorber 4, so sind der Sorber 4, der Sorberkreislauf 6 und die Verbindungsleitung 5 auf eine Temperatur abgekühlt, die kleiner als die Vorlauftemperatur ist. In der anschließenden Desorptionsphase wird die Verbindungsleitung 5 und damit auch das Pufferelement 14 nicht durchströmt, so dass diese auch nicht auf das Temperaturniveau der Desorption aufgeheizt werden und das Wasser aus dem Pufferelement 14 mit niedriger Temperatur in der nächsten Sorptionsphase für die Kühlung des Sorbers 4 in den Heizkreislauf 9 entlassen werden kann. Im Unterschied zu anderen bereits vorhandenen Konzepten für eine Wärmeverschiebung innerhalb des Sorberkreislaufs handelt es sich bei der erfindungsgemäßen Lösung nicht um eine Wärmespeicherung bzw. um eine Wärmerückgewinnung.

Das Volumen der Verbindungsleitung 5 bzw. des Pufferelements 14 muss dabei so ausgelegt sind, dass eine Temperaturfront generiert werden kann. Das heiße Wasser aus dem Sorber darf nicht, ohne das gesamte Volumen zu nutzen zum Regelventil "durchschießen" können. Im Hinblick auf Wärmeverluste ist das Volumen des Pufferelements 14 als kleiner Puffertank ausgebildet. Dabei muss das Volumen des Puffertanks an Masse, Leistung und Sorptionskapazität des Sorbers 4 entsprechend angepasst ausgebildet sein, um ein optimales Ergebnis zu erzielen, d. h. das Volumen des Pufferelements ist mindestens so groß wie das Volumen des Wärmetauschers 2 des Sorbers 4 ausgebildet, damit der Wärmetauscher 2 des Sorbers 4 mindestens einmal vom kalten Rücklauf durchströmt wird.

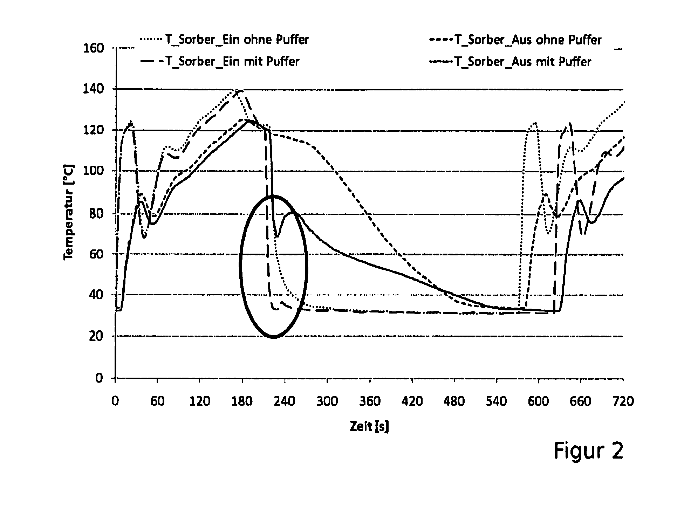

Figur 2 zeigt den Verlauf der Sorbertemperaturen mit und ohne Puffertank (nachfolgend auch Puffer genannt). Die Sorptionsphase beginnt bei ca. 200 Sekunden mit dem Abfall der Sorbereintrittstemperatur. In dem eingekreisten Bereich bei etwa 220 Sekunden ist zu erkennen, dass die Sorberaustrittstemperatur für den Fall ohne Puffer deutlich langsamer fällt als die entsprechende Austrittstemperatur mit Puffer; der Sorber 4 somit besser gekühlt wird. Darüber hinaus ist die Temperaturdifferenz zwischen Sorbereintritt und Sorberaustritt gegen Ende der Sorptionsphase (bei ca. 630 Sekunden) mit Puffer kleiner als in dem Zyklus ohne Puffer, wobei eine kleinere Temperaturdifferenz bedeutet, dass das theoretisch mögliche Potenzial der Sorption bis zum Gleichgewicht besser ausgenutzt wurde und somit mehr Kältemittel sorbiert worden ist. Diese Menge Kältemittel wurde zuvor im Verdampfer unter Aufnahme von Umgebungswärme verdampft und führt somit zu einem höheren Wirkungsgrad.

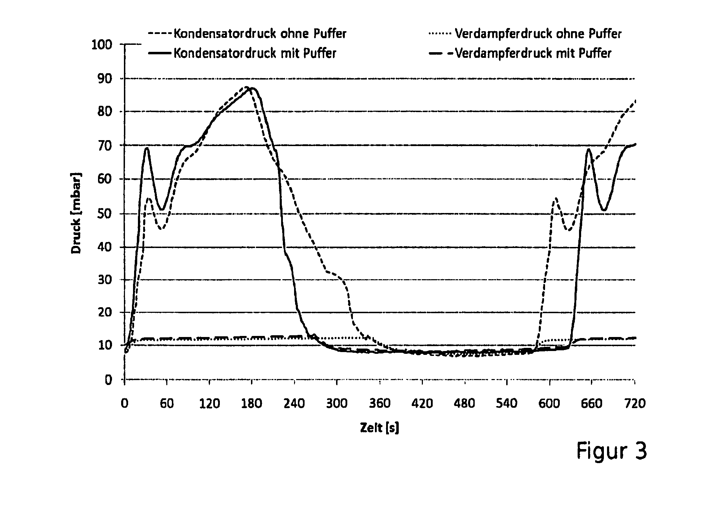

Der Effekt des Puffers ist ebenso in Figur 3 anhand der Drücke im Kondensator- 22 und Verdampferbauraum 23 zu erkennen. Um die Rückschlagklappe 24 zu öffnen, muss der Druck im Kondensatorbauraum 22 minimal unter den Druck im Verdampferbauraum 23 sinken. Der Druck sinkt bei Verwendung des erfindungsgemäßen Puffers schneller und die Rückschlagklappe 24 kann beispielsweise mehr als eine Minute früher öffnen bei einer Dauer der Sorptionsphase von etwa drei bis sechs Minuten. Durch den früheren Beginn der Verdampfung kann eine größere, mittlere Verdampferleistung erreicht und somit mehr Umgebungswärme eingekoppelt werden. Der Effekt ist umso größer, je günstiger die Betriebsbedingungen für den Wärmepumpeneffekt sind. Dies führt zu einem deutlichen Anstieg des Wärmeverhältnisses derartiger Sorptionswärmepumpen.

### Bezugszeichenliste

- 1: Wärmetauscher
- 2: Wärmetauscher
- 3: Wärmequelle
- 4: Sorber
- 5: Verbindungsleitung
- 6: Sorberkreislauf
- 7: erste hydraulische Abzweigung
- 8: vorlaufleitung
- 9: Heizkreislauf
- 10: zweite hydraulische Abzweigung
- 11: Rücklaufleitung
- 12: Kondensator
- 13: Regelventil
- 14: Pufferelement
- 15: Eingang
- 16: Ausgang
- 17: Pumpe
- 18: Rückschlagklappe
- 19: überströmventil
- 20: Vorlaufleitung
- 21: Rückschlagklappe
- 22: Kondensatorbauraum
- 23: Verdampferbauraum
- 24: Rückschlagklappe
- 25: Eingang
- 26: Pumpe
- 27: Verteilerstelle
- 28: Zusatzleitung
- 29: Rückschlagklappe
- 30: Verdampfer

## Patentansprüche

1. Vakuum-Sorptionsvorrichtung, umfassend eine Wärmequelle (3) mit einem ersten Wärmetauscher (1), einen aus einem Sorptionsmittel und einem zweiten Wärmetauscher (2) gebildeten, periodisch ein Kältemittel sorbierenden oder desorbierenden Sorber (4) und einen mit einem Wärmeträgermedium befüllten, die Wärmetauscher (1, 2) miteinander verbindenden, mindestens eine Verbindungsleitung (5) umfassenden Sorberkreislauf (6), wobei die Verbindungsleitung (5) eine erste hydraulische Abzweigung (7) zu einer Vorlaufleitung (8) eines Heizkreislaufs (9) und eine zweite hydraulische Abzweigung (10) zu einer Rücklaufleitung (11) des Heizkreislaufs (9) aufweist, wobei dem Sorber (4) ein Kondensator (12) zugeordnet ist, der einerseits mit der Rücklaufleitung (11) des Heizkreislaufs (9) und andererseits über ein am Heizkreislauf (9) nach der ersten hydraulischen Abzweigung (7) angeordnetes Regelventil (13) mit der Vorlaufleitung (8) des Heizkreislaufs (9) verbunden ist, wobei das Regelventil (13) zur Einstellung eines Mischungsverhältnisses des Wärmeträgermediums aus dem Sorberkreislauf (6) und aus der Rücklaufleitung (11) ausgebildet ist,
**dadurch gekennzeichnet,**
**dass** zwischen der ersten hydraulischen Abzweigung (7) und dem Regelventil (13) ein durchströmbares Pufferelement (14) zur zeitweiligen Aufnahme und Zwischenspeicherung von kaltem Wärmeträgermedium, das zur Kühlung des Sorbers (4) verwendet wird, angeordnet ist.

2. Vakuum-Sorptionsvorrichtung nach Anspruch 1,
**dadurch gekennzeichnet,**
**dass** die Verbindungsleitung (5) als Pufferelement (14) ausgebildet oder mit einem Pufferelement (14) versehen ist.

3. Vakuum-Sorptionsvorrichtung nach Anspruch 1 oder 2,
**dadurch gekennzeichnet,**
**dass** das Pufferelement (14) als Puffertank ausgebildet ist.

4. Verfahren zum Betrieb einer Vakuum-Sorptionsvorrichtung nach einem der Ansprüche 1 bis 3, wobei die Vakuum-Sorptionsvorrichtung wahlweise in einer Desorptions- oder einer Sorptionsphase betrieben wird,
**dadurch gekennzeichnet,**
**dass** vor Beginn der Sorptionsphase eine Sorberkühlungsphase zwischengeschaltet wird.

## Claims

1. A vacuum sorption device, comprising a heat source (3) with a first heat exchanger (1), a sorber (4) which is formed from a sorbent and a second heat exchanger (2) and periodically sorbs or desorbs a refrigerant, and a sorber circuit (6) which is filled with a heat transfer medium, connects the heat exchangers (1, 2) to one another and comprises at least one connecting line (5), wherein the connecting line (5) has a first hydraulic branch connection (7) to a feed line (8) of a heating circuit (9) and a second hydraulic branch connection (10) to a return line (11) of the heating circuit (9), wherein the sorber (4) is assigned a condenser (12) which, on the one hand, is connected to the return line (11) of the heating circuit (9) and, on the other hand, is connected to the feed line (8) of the heating circuit (9) via a control valve (13) arranged downstream of the first hydraulic branch connection (7) on the heating circuit (9), wherein the control valve (13) is designed for setting a mixing ratio of the heat transfer medium from the sorber circuit (6) and from the return line (11),
**characterized in**
**that** a buffer element (14), through which a flow can pass, for temporarily receiving and storing cold heat transfer medium used for cooling the sorber (4) is arranged between the first hydraulic branch connection (7) and the control valve (13).

2. The vacuum sorption device according to claim 1,
**characterized in**
**that** the connecting line (5) is designed as a buffer element (14) or is provided with a buffer element (14).

3. The vacuum sorption device according to claim 1 or 2,
**characterized in**
**that** the buffer element (14) is designed as a buffer tank.

4. A method for operating a vacuum sorption device according to any one of claims 1 to 3, wherein the vacuum sorption device is selectively operated in a desorption or a sorption phase,
**characterized in**
**that** a sorber cooling phase is interposed prior to the start of the sorption phase.

## Revendications

1. Dispositif de sorption sous vide, comprenant une source de chaleur (3) avec un premier échangeur de chaleur (1), un sorbeur (4) formé par un sorbant et un deuxième échangeur de chaleur (2), sorbant ou désorbant périodiquement un agent de refroidissement, et un circuit sorbeur (6) rempli avec un fluide caloporteur, reliant ensemble les échangeurs de chaleur (1, 2), comprenant au moins une conduite de raccordement (5), dans lequel la conduite de raccordement (5) présente une première dérivation hydraulique (7) vers une conduite aller (8) d'un circuit de chauffage (9) et une deuxième dérivation hydraulique (10) vers une conduite de retour (11) du circuit de chauffage (9), dans lequel un condensateur (12) est associé au sorbeur (4), lequel est relié d'un côté à la conduite de retour (11) du circuit de chauffage (9) et de l'autre côté, via une vanne de régulation (13) disposée au niveau du circuit de chauffage (9) après la première dérivation hydraulique (7), à la conduite aller (8) du circuit de chauffage (9), dans lequel la vanne de régulation (13) est réalisée pour régler un rapport de mélange du fluide caloporteur du circuit sorbeur (6) et de la conduite de retour (11),
**caractérisé en ce que**
entre la première dérivation hydraulique (7) et la vanne de régulation (13) est disposé un élément tampon (14) pouvant être traversé par un flux pour la réception temporaire et le stockage intermédiaire d'un fluide caloporteur froid qui est utilisé pour refroidir le sorbeur (4).

2. Dispositif de sorption sous vide selon la revendication 1,
**caractérisé en ce que**
la conduite de raccordement (5) est réalisée en tant qu'élément tampon (14) ou est dotée d'un élément tampon (14).

3. Dispositif de sorption sous vide selon la revendication 1 ou 2,
**caractérisé en ce que**
l'élément tampon (14) est réalisé en tant que réservoir tampon.

4. Procédé pour l'exploitation d'un dispositif de sorption sous vide selon l'une des revendications 1 à 3, dans lequel le dispositif de sorption sous vide est exploité au choix dans une phase de désorption ou une phase de sorption,
**caractérisé en ce que**
avant le début de la phase de sorption, une phase de refroidissement de sorbeur est intercalée.
